# EUROPEAN PATENT APPLICATION

(11) **EP 4 831 085 A1**
(43) Date of publication of application: **28.10.2026**
(21) Application number: 26174269.6
(22) Date of filing: 23.04.2026
(51) Int. Cl.: B65F 3/24, B65F 3/08, B65F 3/22, B65G 33/14, B65F 7/00

(54) **FOOD WASTE COLLECTION AND TRANSPORT VEHICLE WITH FOOD WASTE PLASTIC BAG INPUT DEVICE**

(30) Priority: 25.04.2025 KR 20250054845
(71) Applicant: Na, Min Soo, Hwaseong-si, Gyeonggi-do (KR)
(72) Inventor: Na, Min Soo, Hwaseong-si, Gyeonggi-do (KR)
(74) Representative: Marks & Clerk LLP

(57) **Abstract**

A food waste collection and transport vehicle includes a main vehicle body, a food waste storage tank, a lifting device disposed on the food waste storage tank, a high-concentration food waste transfer device configured to unload high-concentration food waste in the food waste storage tank, and a low-concentration food waste transfer device configured to unload low-concentration food waste in the food waste storage tank. The vehicle further includes a food waste plastic bag input device configured to input food waste plastic bags therethrough, the input device including a device body configured to accommodate food waste plastic bags, a shredding shaft configured to shred the plastic bags and food waste in the plastic bags, and a screw shaft configured to transfer the food waste and plastic bags.

## Description

### CROSS REFERENCE TO RELATED APPLICATION

This application claims priority from Korean Patent Application No. 10-2025-0054845, filed on April 25, 2025, which is hereby incorporated by reference for all purposes as if fully set forth herein.

### BACKGROUND

### Field

The disclosure relates to a food waste collection and transport vehicle capable of easily collecting and transporting food waste with a minimal number of workers regardless of location or area, such as narrow neighborhood alleys and, more particularly, to a food waste collection and transport vehicle including a food waste plastic bag input device configured to easily collect food waste plastic bags discarded separately from the food waste together with the collection of food waste.

### Description

With recent industrial development, an increase in food waste has emerged as a social problem. In particular, food waste generated from restaurants, households, and the like not only continues to increase in amount, but also rapidly decays within a short period of time to generate foul odors, thereby becoming a primary cause of environmental pollution.

Accordingly, in order to reduce environmental pollution caused by food waste set out by individual households, restaurants, and the like, the discarded food waste is collected by a food waste collection vehicle and then processed and recycled into fertilizer or feed as well as to form energy products such as methane gas.

In general, a food waste collection vehicle is a vehicle that collects food waste contained in collection containers set out by households or restaurants and then transports the collected food waste to a predetermined location for processing. The food waste collection vehicle includes a loading compartment capable of collecting and storing the food waste set out by individual households or restaurants, and a lifting device for lifting a collection container containing food waste up to an input opening area of the loading compartment.

Accordingly, after lifting the collection container containing the food waste by the lifting device, the food waste is poured through the input opening area into the loading compartment, the emptied collection container is lowered again by the lifting device and returned to its original position, and then the collected food waste is transported to a food waste processing facility, thereby completing the food waste collection and transport operation.

However, because most conventional food waste collection vehicles are large vehicles, it is not easy to collect food waste in confined areas such as narrow neighborhood alleys. In some cases, food waste has to be collected using a small vehicle.

In such a case, because small amounts of food waste collected need to be transported to the food waste processing facility multiple times, a large amount of foul odor is generated and transport costs are not insignificant, which is disadvantageous in environmental and economic aspects. Furthermore, at least two to three workers are required for food waste collection, resulting in a burden of labor costs and reduced efficiency in various administrative aspects.

When food waste is set out by a general household or business, there are frequent cases in which the food waste is not placed into a collection container, but instead the food waste is illegally dumped next to or around the collection container while being contained in food waste plastic bags. In such a case, not only does foul odor and contamination cause discomfort to residents, but also there is no suitable way to collect such food waste plastic bags using a food waste collection vehicle dedicated to collection containers, and thus there is an urgent need to prepare countermeasures therefor.

### Related Art Document

Patent Document 1: Korean Patent No. 100974011.
Patent Document 2: Korean Patent No. 101071957.
Patent Document 3: Korean Patent No. 101228040.
Patent Document 4: Korean Patent No. 101981268.

### BRIEF SUMMARY

Various aspects of the disclosure provide a food waste collection and transport vehicle including a food waste plastic bag input device with a food waste plastic bag collection container including, therein, a plastic bag shredder and an inclined screw, such that, when collecting food waste from a collection container, food waste plastic bags may also be easily collected together. The food waste collection and transport vehicle is implemented as a small truck having a vehicle rating of 5 tons or less, thereby enabling food waste to be easily collected even in confined areas such as narrow neighborhood alleys, while also increasing the amount of food waste collected. Furthermore, the food waste collection and transport vehicle may implement a system in which food waste collected by a small vehicle of 1 ton to 5 tons is easily transferred and loaded onto a large vehicle of 25 tons or more and then transported to a food waste processing facility. Furthermore, the food waste collection and transport vehicle allows the collected food waste to be unloaded in a sealed state to minimize the generation of foul odors.

According to an aspect, a food waste collection and transport vehicle includes: a main vehicle body; a food waste storage tank disposed on the main vehicle body and having a food waste inlet with a cover; a lifting device disposed on one side of the food waste storage tank; a high-concentration food waste transfer device disposed in a structure extending from an interior to an upper portion via a lateral portion of the food waste storage tank to unload high-concentration food waste contained in the food waste storage tank; and a low-concentration food waste transfer device disposed in a structure extending from the lateral portion to the upper portion of the food waste storage tank to unload low-concentration food waste contained in the food waste storage tank.

The high-concentration food waste transfer device includes as means for consecutively transferring food waste while being driven by respective motors, a first screw conveyor disposed in the interior of the food waste storage tank and configured to transfer food waste contained in the food waste storage tank, a second screw conveyor disposed at the lateral portion of the food waste storage tank and configured to transfer food waste received from the first screw conveyor, and a third screw conveyor disposed at the upper portion of the food waste storage tank and configured to transfer food waste received from the second screw conveyor.

The food waste collection and transport vehicle further includes a food waste plastic bag input device disposed on one side of the second screw conveyor and configured to input food waste plastic bags therethrough, wherein the food waste plastic bag input device includes: a device body having an openable upper body cover and configured to accommodate food waste plastic bags therein, a shredding shaft disposed in the device body and configured to operate by a shredding motor to shred the plastic bags and food waste contained in the plastic bags, and a screw shaft disposed in the device body, connected to the second screw conveyor, and configured to operate by a transfer motor to transfer the food waste and plastic bags into the second screw conveyor.

The shredding shaft may be provided as a pair of shredding shafts arranged in parallel with each other while being operatively linked by a transmission gear, the pair of shredding shafts having shredding blades, respectively.

The screw shaft may be located below the shredding shaft and disposed in a downwardly inclined posture so that a side connected to the second screw conveyor faces downwards.

The food waste plastic bag input device may include a first guide plate having an inclined structure, disposed in the device body, and configured to guide food waste plastic bags towards the shredding shaft and a second guide plate having an inclined structure, disposed in the device body, and configured to guide the shredded food waste and plastic bags towards the screw shaft.

In an example embodiment, the second screw conveyor and the third screw conveyor may each include a bucket-type screw having screw blades configured to facilitate the transfer of high-moisture food waste, wherein flat bar members having a height of about 35 mm are attached perpendicularly along an outer edge portion of the screw such that the screw blades act as buckets.

In an example embodiment, the first screw conveyor of the high-concentration food waste transfer device may further include a shredder rotary blade disposed on the screw and a shredder stationary blade disposed adjacent to the screw.

In an example embodiment, the third screw conveyor of the high-concentration food waste transfer device may be configured such that horizontal rotation is controlled by a conveyor rotation device including a motor and a gear, and vertical inclination is controlled by a conveyor lifting device including a cylinder.

In an example embodiment, the low-concentration food waste transfer device may include a pump disposed at the lateral portion of the food waste storage tank and configured to suction food waste and an articulated pipe connected to a discharge side of the pump, the articulated pipe including a combination of a plurality of pipes configured to be articulated via respective joint portions to various angles in various directions and to be positioned at various heights.

In an example embodiment, a front-end side of the first screw conveyor of the high-concentration food waste transfer device and a suction side of the pump of the low-concentration food waste transfer device may be connected to each other such that food waste transferred during reverse driving of the first screw conveyor may be supplied to the suction side of the pump.

In an example embodiment, a rear portion of the food waste storage tank of the main vehicle body may be provided with a door that is openable and closable by a door cylinder, thereby allowing an entirety of the rear portion of the food waste storage tank to be opened during a cleaning or inspection operation.

In an example embodiment, an inner lower portion of the door may be provided with a food waste guide plate having an inclined structure and configured to prevent a phenomenon in which, during the transfer of food waste by the first screw conveyor, the food waste is pushed to a corner area and accumulates.

In an example embodiment, the cover of the food waste storage tank of the main vehicle body may be automatically opened and closed by a cover cylinder.

As set forth above, the food waste collection and transport vehicle including a food waste plastic bag input device according to the disclosure has the following effects:
(1) Because the vehicle is implemented as a small truck having a vehicle rating of 5 to 10 tons or less, food waste may be easily collected even in confined areas such as narrow neighborhood alleys, and the collection amount may be increased. As a result, the operating rate of equipment at a food waste processing facility may be increased. In particular, during food waste collection, food waste plastic bags may also be conveniently collected together, thereby improving collection efficiency and collection productivity related to food waste collection operations.
(2) Food waste plastic bags collected through the food waste plastic bag input device provided in the food waste collection and transport vehicle are shredded to an appropriate size by a plastic shredder, an inclined screw, and the like and then input, thereby improving not only food waste transfer efficiency but also final food waste processing efficiency at a collection station.
(3) By applying a system in which food waste collected by a small truck of 1 ton to 5 tons is easily transferred and loaded onto a 10-ton medium-sized truck, and then easily transferred from the 10-ton medium-sized truck onto a large truck of 25 tons or more, and finally transported using the large truck to a food waste processing facility, the number of food waste transport trips may be reduced, thereby reducing transport costs.
(4) Because during food waste collection as well as food waste unloading operations, food waste may be easily transferred using the high-concentration food waste transfer device, the low-concentration food waste transfer device, and the like, the number of workers may be minimized, thereby reducing labor costs and enabling efficient workforce management.
(5) Because sealed transfer and sealed unloading of food waste are possible, generation of foul odors may be minimized.

Furthermore, there is another effect that with the front-end side of the first screw conveyor and the suction side of the pump connected to each other, the first screw conveyor is driven in a reverse direction while the pump is operated, such that low-concentration food waste is forcibly transferred along the first screw conveyor toward the pump and discharged to the outside, so that the low-concentration food waste remaining in the food waste storage tank may be discharged quickly, conveniently, and without residue, thereby improving discharge efficiency of the low-concentration food waste and improving workability, compared to a method of simply draining the low-concentration food waste by allowing the low-concentration food waste to fall downwards.

That is, by including a configuration such as a combination of the first screw conveyor and the pump, where the first screw conveyor forcibly discharges liquid while transferring the liquid (for example, the first screw conveyor having two functions: transferring high-concentration food waste and transferring low-concentration food waste), it is possible to quickly, conveniently, and completely discharge low-concentration food waste remaining in the food waste storage tank, thereby improving discharge efficiency of the low-concentration food waste, as well as workability because the operation is not cumbersome.

### DESCRIPTION OF DRAWINGS

The above and other objectives, features, and advantages of the disclosure will be more clearly understood from the following detailed description, taken in conjunction with the accompanying drawings, in which:
FIGS. 1 and 2 are perspective views illustrating a food waste plastic bag input device in a food waste collection and transport vehicle according to an embodiment of the disclosure;
FIGS. 3 to 5 are a front view, a plan diagram, and a side diagram illustrating the food waste plastic bag input device in the food waste collection and transport vehicle according to an embodiment of the disclosure;
FIGS. 6 and 7 are perspective views illustrating the food waste collection and transport vehicle in which the food waste plastic bag input device is disposed according to an embodiment of the disclosure;
FIGS. 8 to 10 are a plan view, a side diagram, and a rear diagram illustrating the food waste collection and transport vehicle in which the food waste plastic bag input device is disposed according to an embodiment of the disclosure;
FIG. 11 is a perspective view illustrating a high-concentration food waste transfer device in the food waste collection and transport vehicle in which the food waste plastic bag input device is disposed according to an embodiment of the disclosure;
FIG. 12 is a perspective view illustrating a low-concentration food waste transfer device in the food waste collection and transport vehicle in which the food waste plastic bag input device is disposed according to an embodiment of the disclosure; and
FIGS. 13 to 15 are a plan view, a side diagram, and a rear diagram illustrating an operating state of the food waste collection and transport vehicle in which the food waste plastic bag input device is disposed according to an embodiment of the disclosure.

### DETAILED DESCRIPTION

Hereinafter, the disclosure will be described in detail with reference to the accompanying drawings.

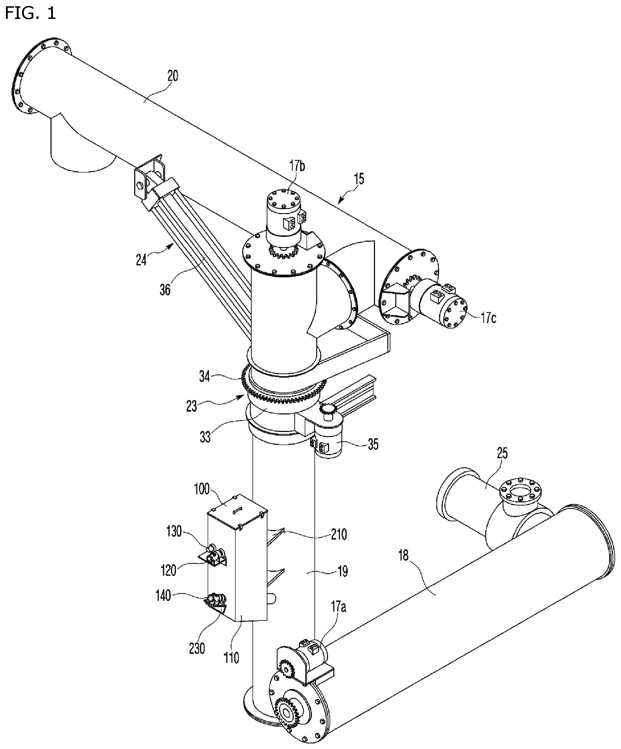

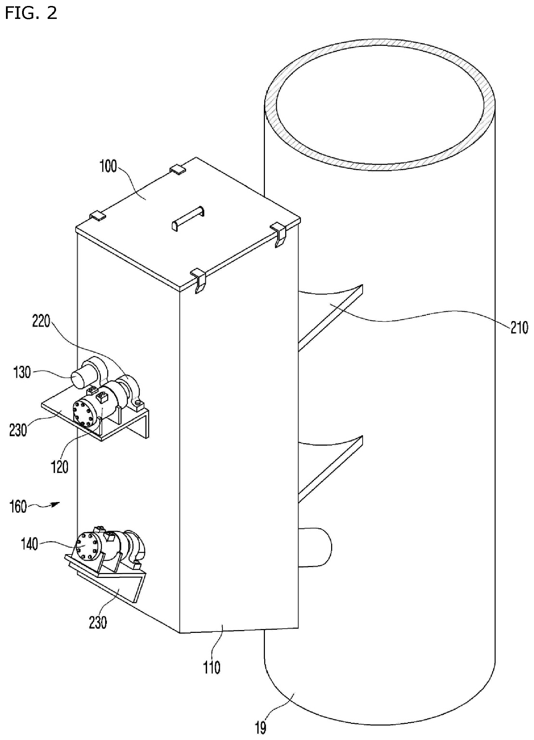

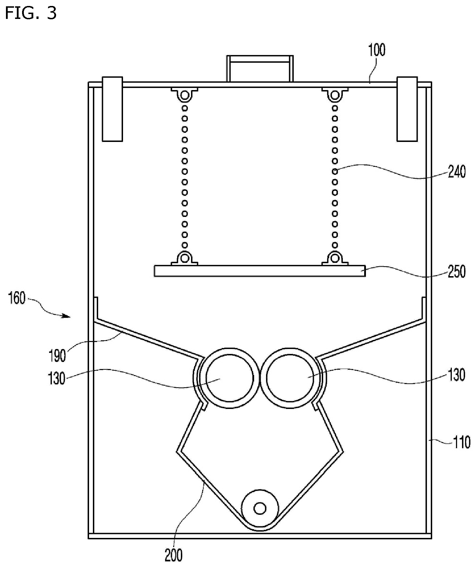

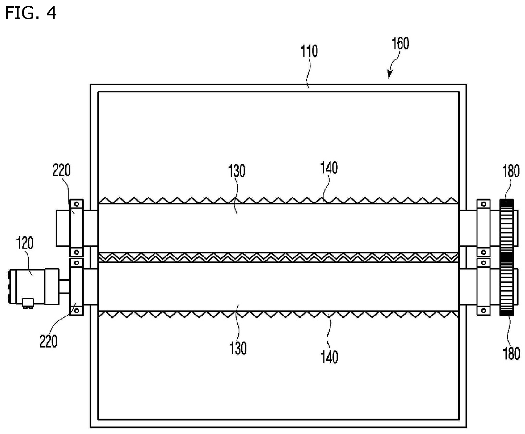

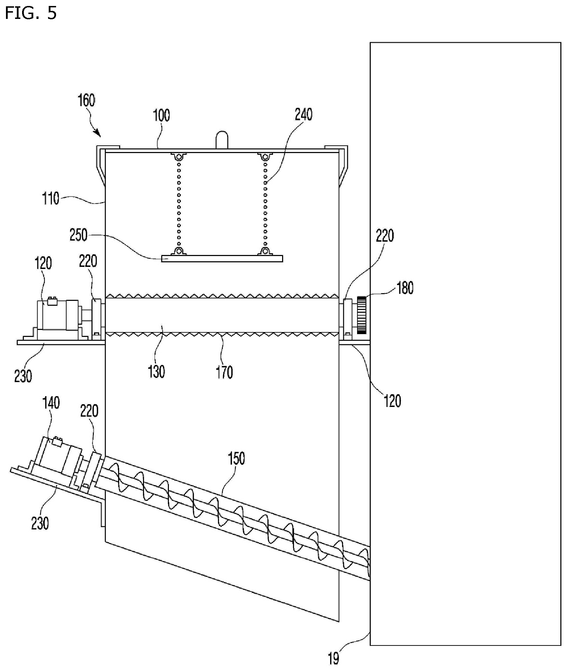

FIGS. 1 and 2 are perspective views illustrating a food waste plastic bag input device in a food waste collection and transport vehicle according to an embodiment of the disclosure, and FIGS. 3 to 5 are a front view, a plan view, and a side diagram illustrating the food waste plastic bag input device in the food waste collection and transport vehicle according to an embodiment of the disclosure.

As illustrated in FIGS. 1 to 5, the food waste plastic bag input device 160 of the food waste collection and transport vehicle allows, when collecting food waste using the vehicle, not only food waste contained in a food waste collection container but also food waste plastic bags discarded around the food waste collection container to be collected together, and thus provides an advantage in that food waste in the collection container and food waste plastic bags may be easily collected.

To this end, the food waste plastic bag input device 160 includes a device body 110 as a means for allowing food waste plastic bags to be input.

The device body 110 is a type of housing having a rectangular or circular tubular structure, which is arranged vertically side-by-side with one side of a second screw conveyor 19 while being supported on the second screw conveyor 19 by a plurality of body supports 210 via a welded or bolted fastening structure.

In this case, a lower portion of the device body 110 has a tapered shape and is configured in a downwardly inclined structure towards the first screw conveyor 19.

Furthermore, a body cover 110 having an openable/closable structure is disposed at an upper portion of the device body 110. Accordingly, when food waste plastic bags are placed into the device body 110, the body cover 110 may be opened, the food waste plastic bags may be placed into the device body 110, and then the body cover 110 may be closed again.

Here, the body cover 110 is preferably configured to be opened and closed in an up-and-down pivoting manner using a hinge portion (not shown) on one side.

In an example embodiment, the body cover 110 may be provided with a pressing plate 250 that receives a force from a spring 240 and applies a pressing force downwards, as a means for assisting the shredding of the food waste plastic bags.

For example, the spring 240 may be disposed vertically at a central portion of an inner surface of the body cover 110 in a structure in which an upper end portion of the spring 240 is supported, and the pressing plate 250 may be disposed in a horizontal posture at a lower end portion of the spring 240. In this case, the pressing plate 250 is allowed to move up and down while being elastically supported by the spring 240.

Accordingly, when the body cover 110 is closed after a food waste plastic bag is placed into the device body 110, the pressing plate 250 continuously presses the food waste plastic bag downward, that is, toward a shredding shaft 130 so that shredding proceeds while the food waste plastic bag is pressed toward the shredding shaft 130, thereby allowing the plastic bags and the food waste in the plastic bags to be shredded more efficiently.

Furthermore, the food waste plastic bag input device 160 includes a shredding shaft 130 as a means for shredding the plastic bags and the food waste in the plastic bags.

The shredding shaft 130 is disposed in the device body 110 and during the operation of a shredding motor 120, is rotated to shred the food waste plastic bag, that is, food waste and plastic.

To this end, two shredding shafts 130, each having shredding blades 170, are horizontally disposed in parallel with each other in the device body 110. Each shredding shaft 130 is supported at both ends by a bearing 220 on a body support 210 supporting the device body 110 and a bearing 220 on a motor support 230 disposed on the device body 110, so as to be freely rotatable.

At this time, the shredding blades 170 provided on peripheral surfaces of the shredding shafts 130 arranged in parallel with each other are positioned in a staggered arrangement, so that food waste and plastics entering between the two shredding shafts 130 may be shredded more effectively.

The motor support 230 is disposed on one side of an outer surface of the device body 110. The shredding motor 120 and the bearing 220 are disposed on the motor support 230, and one of the two shredding shafts 130 is connected to a shaft of the shredding motor 120.

Furthermore, transmission gears 180 are respectively disposed at rear end portions of the two shredding shafts 130 arranged in parallel with each other, and the two transmission gears 180 are configured to rotate while being meshed with each other.

That is, by using the power transmission action of the transmission gears 180, the two shredding shafts 130 may be operated by a single shredding motor 120.

Accordingly, when a food waste plastic bag is inserted into the device body 110, the food waste plastic bag enters a region where the two shredding shafts 13 rotated by the operation of the shredding motor 120 are located, and then the food waste plastic bag and the food waste in the plastic bag are finely shredded while passing between the two shredding shafts 13, and then may fall toward the screw shaft 150 positioned below.

Furthermore, the food waste plastic bag input device 160 includes the screw shaft 150 as a means for transferring the shredded food waste and plastics into the interior of the second screw conveyor 19.

The screw shaft 150 is positioned below the shredding shaft 130 in the device body 110 so as to be supported at both ends between the bearing 220 on the motor support 230 and the second screw conveyor 19.

Here, the screw shaft 150 provided as above, for example, a combination of a screw positioned at a central portion and a pipe surrounding the screw (wherein the pipe is a pipe whose upper portion is open so that food waste and plastics may be introduced toward the screw), communicates with the interior of the second screw conveyor 19.

Furthermore, the motor support 230 is disposed on one side of an outer surface of the device body 110. A transfer motor 140 and a bearing 220 are disposed on the motor support 230, and the screw shaft 150 is connected to a shaft of the transfer motor 140. Furthermore, when the transfer motor 140 operates, the screw shaft 150 is rotated to transfer food waste and plastics.

In an example embodiment, the screw shaft 150 may be positioned below the shredding shaft 13 and disposed in a downwardly inclined posture such that the side connected to the second screw conveyor 19 faces downwards, thereby enabling more efficient transfer of food waste and plastics.

Accordingly, the food waste and plastics shredded by the upper shredding shaft 13 fall toward the screw shaft 150, and the fallen food waste and plastics are pushed downward and transferred by the rotating screw shaft 150 and then introduced into the interior of the second screw conveyor 19.

Furthermore, the food waste plastic bag input device 160 includes a first guide plate 190 and a second guide plate 200 as means for gathering, within the device body 110, the food waste plastic bags, food waste, and plastics toward the shredding shaft 130 and the screw shaft 150.

The first guide plate 190 is configured to extend downwardly in an inclined manner from positions on both inner sidewalls of the device body 110 (e.g., positions above the shredding shafts) to the positions where the shredding shafts 130 are located, for example, to positions beside the pair of shredding shafts 130, while surrounding the side periphery of the shredding shafts 130.

The second guide plate 200 is configured to extend, within the device body 110, in a two-stage inclined shape (e.g., a shape that spreads outward while being inclined downwards from an end of the first guide plate and then continues to narrow inwards while being inclined downwards) from a lower end of the first guide plate 190 to a periphery of a lower end of the screw shaft 150.

Accordingly, a food waste plastic bag inserted into the device body 110 is guided along the first guide plate 190 to gather toward the shredding shafts 130 and is shredded, and subsequently, the shredded food waste and plastics are guided along the second guide plate 200 to gather toward the screw shaft 150 and are transferred.

Therefore, the process in which the food waste plastic bag is introduced up to the second screw conveyor 19 from the food waste plastic bag input device configured as described above is as follows.

When collecting food waste, the food waste collection and transport vehicle may collect not only the food waste contained in a food waste collection container but also food waste plastic bags discarded around the food waste collection container together.

To this end, when the body cover 100 is opened and food waste plastic bags are inserted into the device body 110, the food waste plastic bags are guided along the first guide plate 190 to gather toward the shredding shafts 130 and, at the same time, are pressed by the pressing plate 250, whereby shredding is performed between the two rotating shredding shafts 130.

Furthermore, the food waste plastic bags and the food waste in the plastic bags finely crushed by the shredding shafts 130 fall downwards and at the same time are guided along the second guide plate 200 to gather toward the screw shaft 150.

Subsequently, the food waste and the plastics are transferred by the rotating screw shaft 150 into the interior of the second screw conveyor 19. The food waste and the plastics may then be transferred upward together with the food waste being conveyed along the interior of the second screw conveyor 19. As a result, it is possible to easily perform, together, the operation of collecting food waste in the food waste collection container and the operation of collecting food waste plastic bags around the food waste collection container.

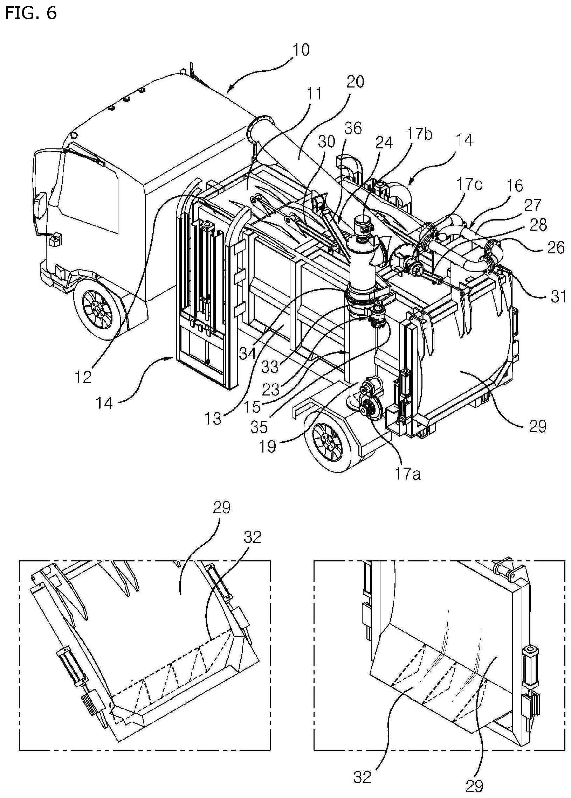

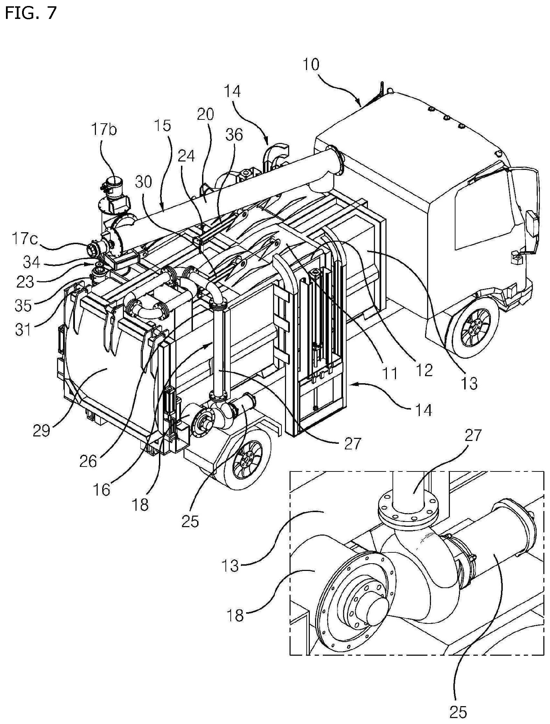

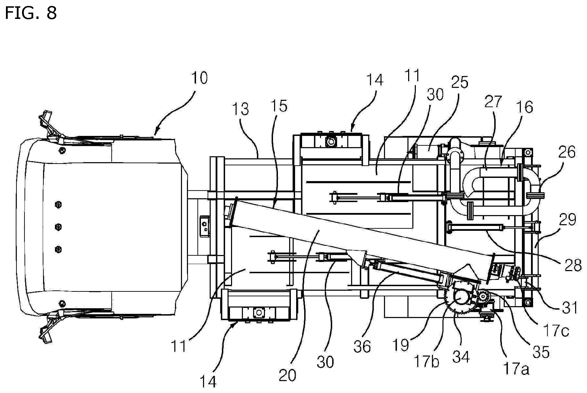

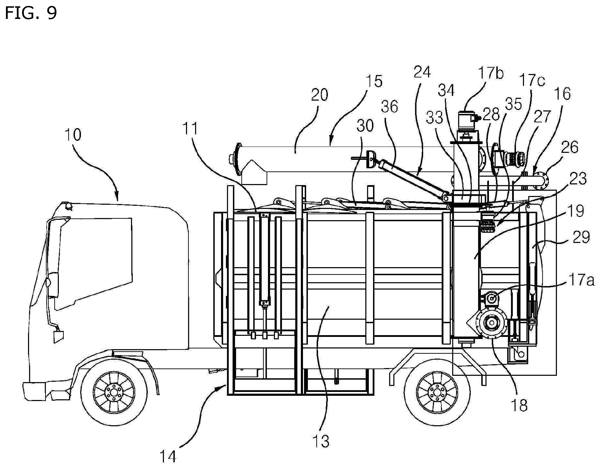

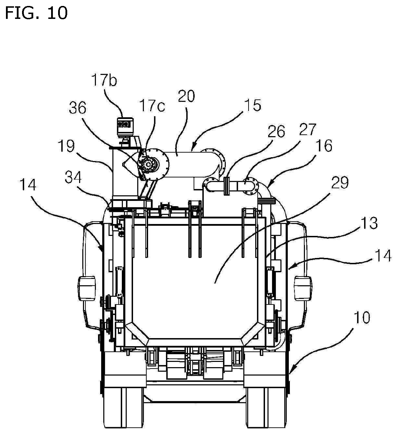

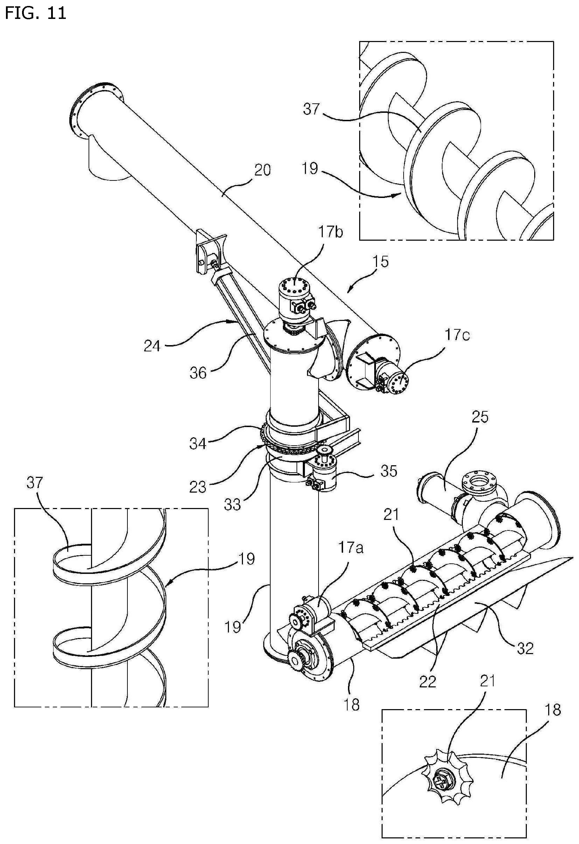

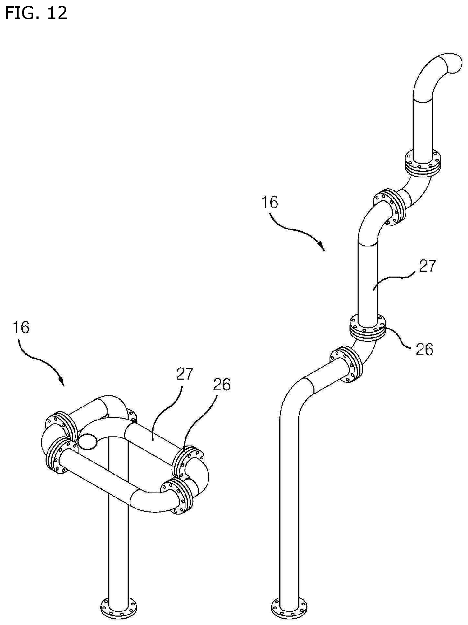

FIGS. 6 and 7 are perspective views illustrating a food waste collection and transport vehicle in which the food waste plastic bag input device is disposed according to an embodiment of the disclosure, FIGS. 8 to 10 are a plan view, a side diagram, and a rear diagram illustrating the food waste collection and transport vehicle in which the food waste plastic bag input device is disposed according to an embodiment of the disclosure, FIG. 11 is a perspective view illustrating a high-concentration food waste transfer device in the food waste collection and transport vehicle in which the food waste plastic bag input device is disposed according to an embodiment of the disclosure, and FIG. 12 is a perspective view illustrating a low-concentration food waste transfer device in the food waste collection and transport vehicle in which the food waste plastic bag input device is disposed according to an embodiment of the disclosure.

As illustrated in FIGS. 6 to 12, the food waste collection and transport vehicle includes a main vehicle body 10, for example, a vehicle body main 10 of a dump truck, as a means for collecting and transporting food waste.

The main vehicle body 10 is a vehicle that directly collects food waste from a food waste collection container discharged from homes, restaurants, and the like, and from a food waste collection container disposed at a food waste collection station such as an apartment complex, which is implemented as a small truck, for example, a small dump truck such as a 5-ton dump truck.

A food waste storage tank 13 is mounted in a rear loading area of the main vehicle body 10, and accordingly, the food waste may be collected and transported while moving the vehicle with the food waste storage tank 13 loaded thereon.

In particular, the main vehicle body 10 is a type of truck capable of discharging food waste by tilting the food waste storage tank 13, that is, a dump truck. Thus, when directly introducing food waste into a food waste collection site provided lower than the ground, the main vehicle body may pour food waste by tilting the food waste storage tank 13 with a door 29 of the food waste storage tank 13 open. Furthermore, when transferring the food waste to a large truck, the main vehicle body may transfer the food waste using high-concentration and low-concentration food waste transfer devices 15 and 16.

Furthermore, the food waste collection and transport vehicle includes the food waste storage tank 13 as a means for containing food waste collected from a food waste collection container.

The food waste storage tank 13 has a rectangular cylindrical structure in which food waste may be received, and is integrally mounted on the main vehicle body 10.

One or more food waste inlets 12 each with a cover 11, for example, two food waste inlets 12, are provided at an upper portion of the food waste storage tank 13 such that food waste may be introduced into the food waste storage tank 13 therethrough. The cover 11 may be automatically opened and closed by a cover cylinder 30.

Furthermore, a door 29 having a size corresponding to the entire area of a rear surface portion is disposed at a rear side of the food waste storage tank 13. The door 29 is configured to be opened or closed while rotating about a door hinge portion 31 at an upper end when a door cylinder 28 is operated.

Accordingly, when performing internal cleaning or inspection of the food waste storage tank 13, the door 29 may be opened to open the entire rear portion of the food waste storage tank 13, and thus various tasks may be easily performed.

Here, a food waste guide plate 32 having an inclined structure is disposed at a lower end portion of an inner surface of the door 29. The food waste guide plate 32 serves to prevent a phenomenon in which, when transferring food waste to the first screw conveyor 18, the food waste is pushed toward a corner region and accumulates.

Furthermore, the food waste collection and transport vehicle includes a lifting device 14 as a means for lifting or lowering a food waste collection container.

The lifting device 14 is disposed vertically on one lateral portion of the food waste storage tank 13, for example, on one lateral portion at the position in which the food waste inlet 12 is located.

Accordingly, when an operator loads a food waste collection container onto the lifting device 14 and operates the lifting device 14, the food waste collection container is raised to a height of the food waste inlet 12 and is inverted, and thus food waste in the food waste collection container is poured and enters the food waste storage tank 13 through the food waste inlet 12.

Because the lifting device 14 is the same as a lifting device provided in a conventional food waste collection vehicle, a detailed description thereof will be omitted.

Furthermore, the food waste collection and transport vehicle includes a high-concentration food waste transfer device 15 as a means for unloading high-concentration food waste (e.g., high-concentration food waste such as lumps, sludge, and the like) contained in the food waste storage tank 13 when transferring collected food waste to a large truck of about 25 tons.

The high-concentration food waste transfer device 15 is configured to extend from an interior to an upper portion via a lateral portion of the food waste storage tank 13 to transfer high-concentration food waste in the food waste storage tank 13 in a bucket-type screw manner and discharge the high-concentration food waste from the food waste storage tank 13.

To this end, the high-concentration food waste transfer device 15 includes three screw conveyors, for example, a first screw conveyor 18 disposed in the interior of the food waste storage tank 13 and configured to transfer food waste contained in the food waste storage tank 13; a second screw conveyor 19 disposed at a lateral portion of the food waste storage tank 13 and configured to transfer food waste received from the first screw conveyor 18; and a third screw conveyor 20 disposed at an outer upper portion of the food waste storage tank 13 and configured to transfer food waste received from the second screw conveyor 18.

The first screw conveyor 18, the second screw conveyor 19, and the third screw conveyor 20 are configured in an interlocking manner, for example, such that a rear end portion of the first screw conveyor 18 communicates with a lower end portion of the second screw conveyor 19 and an upper end portion of the second screw conveyor 19 communicates with a front end portion of the third screw conveyor 20.

Accordingly, when the first screw conveyor 18, the second screw conveyor 19, and the third screw conveyor 20 are driven, the food waste contained in the food waste storage tank 13 may be transferred along the first screw conveyor 18 → the second screw conveyor 19 → the third screw conveyor 20 and discharged to the outside.

Furthermore, reduction motors 17a, 17b, 17c for driving the screws are disposed on the first screw conveyor 18, the second screw conveyor 19, and the third screw conveyor 20, respectively. In this case, as for the reduction motor 17a disposed on the first screw conveyor 18, a reversibly-driven motor may be used.

By applying, as the reduction motor 17a of the first screw conveyor 18, a reversibly-driven motor, high-concentration food waste may be transferred toward the second screw conveyor 19 during forward driving of the reduction motor 17a, and low-concentration food waste may be transferred toward a pump 25 of the low-concentration food waste transfer device 16 during reverse driving of the reduction motor 17a.

Here, the first screw conveyor 18 and the second screw conveyor 19 are fixedly disposed in a structure of being supported on the food waste storage tank 13, and the third screw conveyor 20 is disposed in a structure of being supported on an upper end side of the second screw conveyor 19, for example, on a rotatable upper section of the second screw conveyor 19, such that not only horizontal rotation but also vertical rotation is possible.

In an example embodiment, the second screw conveyor 19 in a vertical posture and the third screw conveyor 20 in a horizontal posture as well as in an inclined posture each include a bucket-type screw having screw blades 37 configured to have a predetermined height along an edge of the screw and provided perpendicular to the screw.

Accordingly, the second screw conveyor 19 and the third screw conveyor 20 have a feature of being capable of easily transferring high-moisture food waste and the like by using the screw having the screw blades 37.

In particular, the high-concentration food waste transfer device 15 includes a shredder rotary blade 21 and a shredder stationary blade 22 as means for shredding food waste when transferring the food waste to the first screw conveyor 18.

The shredder rotary blade 21 includes a plurality of circular blades mounted on the screw of the first screw conveyor 18 and configured to rotate together when the screw rotates. As the plurality of circular blades mounted at predetermined intervals along the screw rotate, the food waste having a large volume or being clumped may be shredded together with the corresponding shredder stationary blade 22.

Here, the shredder rotary blade 21 is mounted on the screw in a structure of being rotatable by a pin so as to be able to rotate about the pin by itself, and at the same time, when the screw rotates, the shredder rotary blade 21 is also able to rotate while drawing a spiral trajectory together with the screw.

The shredder stationary blade 21 is provided in a bar shape that is horizontally arranged in parallel on both sides of the screw of the first screw conveyor 18 and disposed in a structure in which both ends thereof are fixed to the housing. Serrated teeth are provided on an inner surface of the shredder stationary blade 21, that is, a surface facing the shredder rotary blade 21. Because the blade parts of the shredder rotary blade 21 pass between the serrated teeth provided as described above, the food waste may be finely shredded by the blade parts of the shredder rotary blade 21 and the shredder stationary blade 22.

Accordingly, when the first screw conveyor 18 is driven, the food waste is transferred by the screw and simultaneously shredded by the shredder rotary blade 21 and the shredder stationary blade 22, thereby increasing not only the transfer efficiency of the food waste but also processing efficiency in subsequent processes.

In an example embodiment, the third screw conveyor 20 of the high-concentration food waste transfer device 15 has a structure in which horizontal rotation is controlled by a conveyor rotation device 23 and vertical inclination is controlled by a conveyor lifting device 24, so that the third screw conveyor 20 may be maintained in appropriate postures during vehicle travel and during food waste unloading, respectively.

To this end, the conveyor rotation device 23 includes a bushing 33, a rotation gear 34, a rotation motor 35, and the like.

Here, a housing of the second screw conveyor 20 is divided into an upper housing and a lower housing, wherein the upper and lower housings are connected by a cylindrical bushing 33. In this case, the upper housing is rotatable together with the bushing 33 relative to the fixed lower housing.

Furthermore, the rotation gear 34 is disposed on an outer circumferential surface of the bushing 33, and the rotation motor 35 supported by a bracket on the food waste storage tank 13 is disposed beside the bushing 33, wherein a gear on a shaft of the rotation motor 35 meshes with the rotation gear 34.

Accordingly, when the rotation motor 35 operates, the bushing 33 and the upper housing of the second screw conveyor 20, and the entirety of the third screw conveyor 20 connected to the second screw conveyor 20, may be horizontally rotated about the housing axis line of the second screw conveyor 20 by power transmission between the gear on the motor shaft and the rotation gear 34 on the bushing 33.

Furthermore, the conveyor lifting device 24 includes a lifting cylinder 36 that provides power for lifting.

The lifting cylinder 36 is arranged in parallel at a lower portion of the third screw conveyor 20. A cylinder body of the lifting cylinder 36 is supported by a bracket on the bushing 33, and a cylinder rod is supported by a bracket on the housing of the third screw conveyor 20.

At this time, a circular pipe connecting a front end portion of the housing of the third screw conveyor 20 and an upper end portion of the upper housing of the second screw conveyor 19, which communicate with each other, is connected at a middle portion thereof by a cylindrical bushing (not shown) that is a type of axial pipe, so that the third screw conveyor 20 may rotate up and down about an axis line of the circular pipe.

Accordingly, when the lifting cylinder 36 moves forwards and backwards, the third screw conveyor 20 rotates about the axis line of the circular pipe, and thus a rear end portion of the third screw conveyor 20 is moved upward or downward.

Furthermore, the food waste collection and transport vehicle includes a low-concentration food waste transfer device 16 as a means for unloading low-concentration food waste (e.g., low-concentration food waste such as food waste wastewater, food waste residues, and the like) contained in the food waste storage tank 13 when transferring collected food waste to a large truck of about 25 tons.

The low-concentration food waste transfer device 16 is configured to extend from a lateral portion to an upper portion of the food waste storage tank 13, in order to unload low-concentration food waste contained in the food waste storage tank 13.

To this end, the low-concentration food waste transfer device 16 includes a pump 25 for suctioning and pumping food waste, and an articulated pipe 27 for transferring and discharging the food waste to the outside.

The pump 25 is disposed on the lateral portion of the food waste storage tank 13. A suction side of the pump 25 is connected to a front end portion of the first screw conveyor 18, that is, an outwardly exposed housing portion of the food waste storage tank 13, and a discharge side thereof is connected to a lower end portion of the articulated pipe 27, that is, a lower end portion of a pipe vertically fixed to the lateral portion of the food waste storage tank 13.

Accordingly, when the pump 25 operates, food waste supplied by the first screw conveyor 18 may be transferred to the articulated pipe 27 by the pumping action of the pump 25.

The articulated pipe 27 has a combination structure of a pipe connected to the pump 25 while being fixedly disposed vertically on the lateral portion of the food waste storage tank 13 and a plurality of pipes configured to be articulated via respective joint portions 26 to various angles in various directions and to be positioned at various heights.

Here, the joint portions 26 have a structure similar to a boom of a conventional concrete pump truck, so that each pipe may freely assume various postures.

For example, during vehicle travel, the articulated pipe 27 may assume a posture in which the articulated pipe is folded and closely attached to the upper portion of the food waste storage tank 13, and during food waste unloading, the articulated pipe 27 may assume a posture in which the articulated pipe is unfolded and raised upward, for example, above the food waste storage tank 13.

Therefore, in a state in which the front end side of the first screw conveyor 18 of the high-concentration food waste transfer device 15 and the suction side of the pump 25 of the low-concentration food waste transfer device 16 are connected to each other, when the first screw conveyor 18 is driven in a reverse direction and the pump 25 operates, food waste in the food waste storage tank 13 is transferred toward the pump 25 along the first screw conveyor 18, is then transferred along the articulated pipe 27 by the pumping action of the pump 25, and is discharged to the outside and transferred to a large truck.

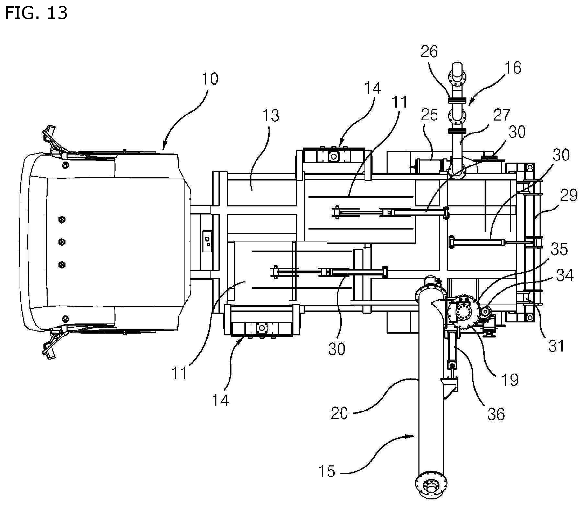

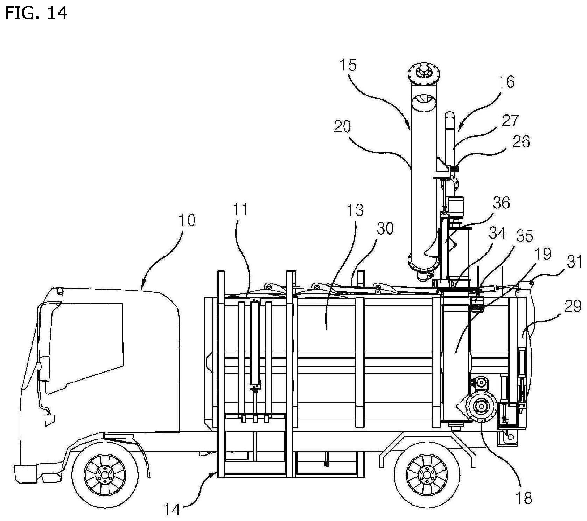

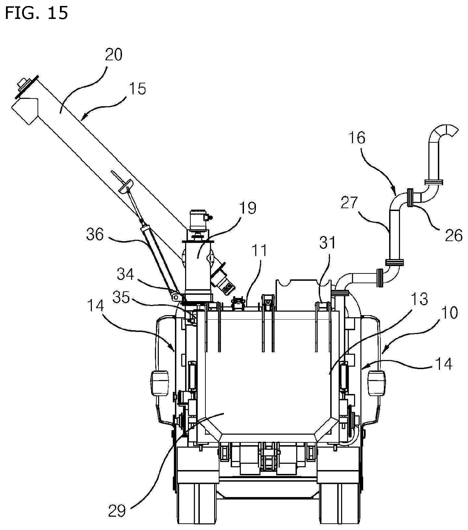

FIGS. 13 to 15 are a plan view, a side diagram, and a rear diagram illustrating an operating state of the food waste collection and transport vehicle in which the food waste plastic bag input device is disposed according to an embodiment of the disclosure.

As illustrated in FIGS. 13 to 15, when collecting food waste discharged from restaurants, homes, and the like, the main vehicle body 10 of a 5-ton truck is operated to collect food waste while traveling through narrow alleys and the like.

With the cover 11 of the food waste collection tank 13 in an open state, a food waste collection container (not shown) is loaded onto the lifting device 14, and then the lifting device 14 is operated to introduce the food waste in the food waste collection container into the food waste collection tank 13.

When, by repeating this operation, a certain amount of food waste has been collected in the food waste collection tank 13, the food waste is transferred to a 25-ton large truck and then disposed of at a food waste collection site, or is directly transported by a 5-ton small truck and disposed of at the food waste collection site.

In an example, when transferring and loading food waste from a 5-ton small truck to a 25-ton large truck, during unloading of high-concentration food waste using the high-concentration food waste transfer device 15, the conveyor rotation device 23 and the conveyor lifting device 24 are operated and at the same time, the third screw conveyor 20 is rotated and lifted such that a discharge side of a rear end portion of the third screw conveyor 20 is positioned at a food waste inlet (not shown) of a food waste storage tank (not shown) of the 25-ton large truck.

Subsequently, when the first screw conveyor 18 is driven in a forward direction and, at the same time, the second screw conveyor 19 and the third screw conveyor 20 are operated, the high-concentration food waste in the food waste storage tank 13 is transferred along the first screw conveyor 18, the second screw conveyor 19, and the third screw conveyor 20, and then discharged and loaded into the food waste storage tank of the 25-ton large truck.

Furthermore, after a certain amount of high-concentration food waste has been transferred and loaded, the remaining low-concentration food waste may be transferred using the low-concentration food waste transfer device 16.

That is, during unloading of low-concentration food waste, the articulated pipe 27 is articulated and raised to a predetermined height, and a discharge side of a pipe at an end thereof is positioned at the food waste inlet of the food waste storage tank of the 25-ton large truck.

Subsequently, when the first screw conveyor 18 is driven in a reverse direction and, at the same time, the pump 25 is operated, the low-concentration food waste in the food waste storage tank 13 is transferred along the first screw conveyor 18, is then suctioned into the pump 25, and is discharged through the articulated pipe 27 to be loaded into the food waste storage tank of the 25-ton large truck.

In this manner, food waste may be efficiently transferred and loaded from multiple 1-ton to 5-ton small trucks to a single 25-ton large truck, and the food waste thus transferred and loaded may be transported by the 25-ton large truck and collected at a food waste collection site.

In particular, during food waste collection, food waste plastic bags that have been left separately may also be easily placed into and collected by the food waste plastic bag input device 160, thereby improving cleanliness around the food waste collection tank as well as enhancing the efficiency of food waste collection operation.

As another example, when food waste collected by a 1-ton to 5-ton small truck is transported to a food waste collection site and directly disposed of, the food waste storage tank 13 is dumped and tilted into an inclined position, and then the door cylinder 28 is operated to open the door 29, whereby the food waste contained in the food waste storage tank 13 is poured out as it is and may be collected at the food waste collection site.

As described above, the disclosure provides a new type of food waste collection and transport vehicle that is implemented as a small truck having a vehicle specification of 5 tons or less, thereby not only enabling easy collection of food waste even in narrow areas such as narrow alleys in a neighborhood but also increasing the amount of collection. Accordingly, it is possible to implement a system in which food waste collected by the small vehicle is easily transferred and loaded into a large vehicle of 25 tons or more and then transported to a food waste processing facility, and it is also possible to unload the collected food waste in a sealed state, thereby reducing the occurrence of malodor. In particular, by providing a food waste plastic bag collection container including, therein, a plastic shredder, an inclined screw, and the like, it is possible to improve the efficiency of food waste collection operation, such as by enabling food waste plastic bags to be easily collected together when collecting food waste.

## Claims

1. A food waste collection and transport vehicle comprising:
a main vehicle body;
a food waste storage tank disposed on the main vehicle body and having a food waste inlet with a cover;
a lifting device disposed on one side of the food waste storage tank;
a high-concentration food waste transfer device configured to extend from an interior to an upper portion via a lateral portion of the food waste storage tank to unload high-concentration food waste contained in the food waste storage tank; and
a low-concentration food waste transfer device configured to extend from the lateral portion to the upper portion of the food waste storage tank to unload low-concentration food waste contained in the food waste storage tank,
wherein the high-concentration food waste transfer device comprises as means for consecutively transferring food waste while being driven by respective motors, a first screw conveyor disposed in the interior of the food waste storage tank and configured to transfer food waste contained in the food waste storage tank, a second screw conveyor fixedly disposed at and supported by the lateral portion of the food waste storage tank while assuming a vertical posture and configured to transfer the food waste received from the first screw conveyor, and a third screw conveyor disposed at the upper portion of the food waste storage tank and configured to transfer the food waste received from the second screw conveyor,
the food waste collection and transport vehicle further comprising a food waste plastic bag input device disposed on one side of the second screw conveyor and configured to input food waste plastic bags therethrough, wherein the food waste plastic bag input device comprises a device body with a cylindrical structure having an openable upper body cover and configured to accommodate food waste plastic bags therein, a shredding shaft disposed in the device body and configured to operate by a shredding motor to shred the plastic bags and food waste contained in the plastic bags, and a screw shaft disposed in the device body, connected to the second screw conveyor, and configured to operate by a transfer motor to transfer the food waste and plastics into the second screw conveyor.

2. The food waste collection and transport vehicle according to claim 1, wherein the shredding shaft is be provided as a pair of shredding shafts arranged in parallel with each other while being operatively linked by a transmission gear, the pair of shredding shafts having shredding blades, respectively.

3. The food waste collection and transport vehicle according to claim 1, wherein the screw shaft is located below the shredding shaft and disposed in a downwardly inclined posture so that a side connected to the second screw conveyor faces downwards.

4. The food waste collection and transport vehicle according to claim 1, wherein the food waste plastic bag input device comprises a first guide plate having an inclined structure, disposed in the device body, and configured to guide food waste plastic bags towards the shredding shaft and a second guide plate having an inclined structure, disposed in the device body, and configured to guide the shredded food waste and plastics towards the screw shaft.

5. The food waste collection and transport vehicle according to claim 1, wherein the second screw conveyor and the third screw conveyor each comprise a bucket-type screw having screw blades provided perpendicularly to the screw while having a certain height along an outer edge portion of the screw.

6. The food waste collection and transport vehicle according to claim 1, wherein the first screw conveyor of the high-concentration food waste transfer device further comprises a shredder rotary blade disposed on the screw and a shredder stationary blade disposed adjacent to the screw.

7. The food waste collection and transport vehicle according to claim 1, wherein the third screw conveyor of the high-concentration food waste transfer device is configured such that horizontal rotation is controlled by a conveyor rotation device including a motor and a gear, and vertical inclination is controlled by a conveyor lifting device including a cylinder.

8. The food waste collection and transport vehicle according to claim 1, wherein the low-concentration food waste transfer device comprises a pump disposed at the lateral portion of the food waste storage tank and configured to suction food waste and an articulated pipe connected to a discharge side of the pump, the articulated pipe comprising a combination of a plurality of pipes configured to be articulated via respective joint portions to various angles in various directions and to be positioned at various heights.

9. The food waste collection and transport vehicle according to claim 1, wherein a front-end side of the first screw conveyor of the high-concentration food waste transfer device and a suction side of the pump of the low-concentration food waste transfer device are connected to each other such that food waste transferred during reverse driving of the first screw conveyor is supplied to the suction side of the pump.

10. The food waste collection and transport vehicle according to claim 1, wherein a rear portion of the food waste storage tank of the main vehicle body is provided with a door that is openable and closable by a door cylinder to allow an entirety of the rear portion of the food waste storage tank to be opened during cleaning or inspection operation.

11. The food waste collection and transport vehicle according to claim 10, wherein an inner lower portion of the door is provided with a food waste guide plate having an inclined structure and configured to prevent a phenomenon in which, during the transfer of food waste by the first screw conveyor, the food waste is pushed to a corner area and accumulates.

12. The food waste collection and transport vehicle according to claim 1, wherein the cover of the food waste storage tank of the main vehicle body is automatically opened and closed by a cover cylinder.
